# EUROPEAN PATENT SPECIFICATION

(11) **EP 4 208 674 B1**
(45) Date of publication and mention of the grant of the patent: **18.06.2025**
(21) Application number: 21763105.0
(22) Date of filing: 24.08.2021
(51) Int. Cl.: F24F 11/30, H04L 12/00, G05B 19/00, F24F 11/89, F24F 11/63, F24F 11/58, F24F 11/57, F24F 11/56, F24F 11/54, F24F 11/49, H04L 12/40, H04L 12/403

(54) **ELECTRONIC ACCESS CONTROL DEVICE FOR CONTROLLING DATA ACCESS TO HVAC DEVICES OF AN HVAC SYSTEM**
ELEKTRONISCHE ZUGANGSSTEUERUNGSVORRICHTUNG ZUR STEUERUNG DES DATENZUGRIFFS AUF HLK-VORRICHTUNGEN EINES HLK-SYSTEMS
DISPOSITIF ÉLECTRONIQUE DE COMMANDE D'ACCÈS POUR COMMANDER L'ACCÈS AUX DONNÉES À DES DISPOSITIFS DE CVC D'UN SYSTÈME DE CVC

(30) Priority: 02.09.2020 CH 10752020
(43) Date of publication of application: 12.07.2023
(73) Proprietor: Belimo Holding AG, 8340 Hinwil (CH)
(72) Inventor: GROGG, Silvio, 8620 Wetzikon (CH); STEINER, Marc, 8836 Bennau (CH); GRAF, Christoph, 8608 Bubikon (CH)
(74) Representative: Rentsch Partner AG
(86) International application number: PCT/EP2021/073323
(87) International publication number: WO 2022/048941

(56) References cited:
- EP-A2- 2 253 894
- CN-A- 108 826 528
- US-A1- 2016 091 902
- US-A1- 2016 209 059
- US-A1- 2016 223 214
- US-A1- 2020 088 435

## Description

### Field of the Invention

The present invention relates to an electronic access control device for controlling data access to Heating, Ventilating and Air Conditioning (HVAC) devices of an HVAC system. Further disclosed is an HVAC system comprising an electronic access control device and a plurality of HVAC devices. Further disclosed is a computer implemented method of operating an electronic access control device for controlling data access to HVAC devices of an HVAC system.

### Background of the Invention

In the field of Heating, Ventilating and Air Conditioning, HVAC systems typically comprise a fluid transportation system and a plurality of HVAC devices, including motorized HVAC devices, such as actuators, valves, dampers, pumps, and fans, and other devices connected to the HVAC system, such as flow sensors, pressure sensors, temperature sensors, rotation sensors, position sensors, humidity sensors, etc. In the field of HVAC, the electric motor is coupled, through gears and/or other mechanical coupling, to an actuated part, such as a valve or damper for controlling the flow of a fluid such as water or air. In addition to an electric motor, motorized HVAC devices or HVAC actuators, respectively, are typically provided with a controller having a processing unit and a data store for storing data content comprising configuration data for operating the HVAC device, and for operation-related data recorded by the HVAC device. The configuration data includes configuration parameters such as motor speed, closing time, opening time, etc. The operation-related data includes values such as number of cycles, number of movements, maximum travel angle, minimum travel angle, etc. In HVAC applications, the controller is connected to sensors, such as flow sensors, pressure sensors, temperature sensors, humidity sensors, air quality sensors, rotation sensors, position sensors, etc., and the configuration data further includes configuration parameters such as a target value of flow rate, a set value of altitude for adjusting the measurement of a flow sensor, etc. Moreover, a section of the data store further has stored therein program code for controlling the processing unit. In HVAC applications, the program code includes various control algorithms for controlling the motor to open and close an orifice of the valve or damper to regulate the flow of fluid, e.g. with regards to differential pressure, room temperature, flow of energy, etc. The management and operation of HVAC systems and their actuators and other HVAC devices can be greatly improved by storing of configuration data, program code, and/or operation-related data. However, HVAC actuators and other HVAC devices are typically installed in locations which are not often accessed and/or are not easily accessible, and hence they are not always connected to a communication network, and most importantly, even when an operator has access to the configuration and operation-related data of an HVAC actuator or another HVAC device, it is very difficult, to assess from this data whether the HVAC actuator or other HVAC device is operating properly and within specified conditions, whether there is problem with regards to the electrical and mechanical condition and operation of the HVAC actuator or other HVAC device, or their actual application and performance, or whether the actuator or some of its attached components and other HVAC devices need to be reconfigured or even replaced, because the answers to these questions depend on further factors, such as current and past environmental conditions (e.g. humidity, temperature), past performance and load of the specific HVAC actuator or other HVAC device, and past performance history with the particular type of HVAC actuator or other HVAC device. Thus, it is desirable to improve the actual monitoring of HVAC systems, whereby the term "monitoring of an HVAC system" is not limited to merely observing behavior and performance of an HVAC system and its actuators and other HVAC devices, but also includes enabling and drawing qualified conclusions with respect to performance and/or conditions of a particular actuator or other HVAC device.

In order to improve management and operation of HVAC systems and their HVAC devices, HVAC systems have been recently developed, wherein the HVAC devices are configured to transmit data content (comprising configuration and/or operation-related data) to a remote server and/or a read-out device, such as a general purpose smartphone or a dedicated read-out terminal communicatively connected to the HVAC device. However, known implementations of such HVAC systems are configured such that the HVAC devices transmit data content directly to the remote server and/or the read-out device. Such known HVAC systems provide a high level of availability to data stored/ captured by HVAC devices. Data access control is handled by known HVAC systems according to one or more of the following approaches:
- relying on (unverified) trust of the read-out device directly connected to the HVAC device, assuming anyone who has physical access to connect to the HVAC device is trusted (security by restricted physical presence);
- distributed data access control by incorporating data access control measures locally into the HVAC devices (edge security);
- delegating data access control to the remote server (off-site security); or
- data access control using a local device.

However, all three approaches have their drawbacks. Relying on trusting the directly connected read-out devices might work in closely monitored environments, but the risks of a data breach are high, since anyone having physical access to the HVAC devices would have unrestricted access to the data content stored thereon.

Incorporating data access control measures locally into the HVAC devices (edge security) is disadvantageous as management of the related data access control policies involves a great deal of distributed effort, since each individual HVAC device needs to be individually configured. Deploying, updating or even monitoring the data access control policies according to a distributed approach in an HVAC system comprising a high number of HVAC devices is therefore time and cost intensive as well as prone to errors. In addition, incorporating data access control measures locally into the HVAC devices is disadvantageous since it increases the complexity of each HVAC device by adding the additional functionality of data access control, which in certain cases might require more powerful and hence also more energy intensive data processing hardware.

Delegating data access control to a remote server (e.g. a cloud based server) has been recently widely adopted in the industry since it overcomes most of the disadvantages of incorporating data access control measures locally into the HVAC devices themselves. However, there are certain use cases when it is desirable not to rely (or not to rely solely) on remote/ off-site data access control. Such use cases comprise HVAC systems deployed on sites with unstable or low-bandwidth network availability, HVAC systems deployed in environments with elevated data privacy requirements or environments where ensuring direct network connection between each HVAC device and a remote server is either technically, logistically or economically not feasible.

According to further known HVAC systems, data access control is provided by a gateway device directly connected to the one or more HVAC device(s), the gateway device being configured to verify authorization to access data from the HVAC system. For example, US 2016/209059 A1 discloses an HVAC system including a first control unit communicatively coupled to a plurality of HVAC units, whereby, after successful authorization, a remote device is granted access to all HVAC units connected to the control unit. As a further example, EP 2 253 894 A2 discloses another HVAC system comprising a plurality of units connected to a communication device, whereby the communication device is configured to grant a terminal access to data related to any one of the connected units. However, for certain HVAC systems, data access control on the system level is insufficient, in particular in HVAC systems comprising numerous HVAC devices.

### Summary of the Invention

It is an object of the present invention to provide a solution for accessing data of HVAC devices of an HVAC system which overcomes at least some of the disadvantages of the prior art. In particular, it is an object of the present invention to provide an electronic access control device for controlling data access to HVAC devices of an HVAC system, which provides a secure and reliable data access control without the reliance (or sole reliance) on a remote/off-site server and overcoming the complexities of distributed data access control while allowing data access control on a device level.

According to the present invention, these objects are achieved through the features of the independent claims. In addition, further advantageous embodiments follow from the dependent claims and the description.

An HVAC system comprises a plurality of HVAC devices. Examples of HVAC devices include motorized HVAC devices, such as actuators, valves, dampers, pumps, and fans, and other, non-motorized devices associated with the HVAC system, such as sensors.

According to the present invention, an electronic access control device comprises a plurality of electronic communication circuits and a processor connected to the electronic communication circuits. At least one of the electronic communication circuits is configured to communicate via a first communication link with an external computing device, separate from the HVAC system. With respect to the 'external computing device', the term 'external' refers to the computing device being structurally external to the HVAC system and the electronic access control device. According to embodiments disclosed herein, the external computing device is co-located with one or more of the HVAC devices of the HVAC system and/or the electronic access control device. Alternatively, or additionally, the external computing device is located remotely/ off-site from the HVAC system and/or the electronic access control device.

Furthermore, at least one of the electronic communication circuits is configured to communicate with one or more of the HVAC devices via a second communication link.

The processor of the electronic access control device is configured to receive a data request from the external computing device via the first communication link. In particular, the processor is configured to control the at least one of the electronic communication circuits, which established the first communication link, to receive a data request from the external computing device. The data request is directed to a particular one of the HVAC devices. According to embodiments disclosed herein, the data request is directed to a particular one of the HVAC devices by way of the data request comprising an identifier and/or address (such as a MAC address) of the particular HVAC device.

Having received the data request from the external computing device, the processor of the electronic access control device is configured to check authorization of the data request for the particular one of the HVAC devices. According to embodiments disclosed herein, the processor is configured to check authorization of the data request by verifying access control data included in the data request, using symmetric or asymmetric cryptography. According to further embodiments disclosed herein, the electronic access control device further comprises a data store having stored therein identification information and the processor is configured to check authorization of the data request by comparing identification information included in the data request with the identification information stored in the data store. According to even further embodiments disclosed herein, the electronic access control device further comprises a data store having stored therein access rights data and the processor is configured to check authorization of the data request using the access rights data stored in the data store and access credentials included in the data request.

The processor is further configured to forward the data request via the second communication link to the particular one of the HVAC devices upon affirmative authorization of the data request. In particular, the processor is configured to control the at least one of the electronic communication circuits, which established the second communication link, to forward the data request via the second communication link to the particular one of the HVAC devices. By way of performing the authorization by the electronic access control device, data access control is shifted away from the individual HVAC devices, allowing a centralized data access management. At the same time, performing the authorization by the electronic access control device, data access control is maintained locally as opposed to known offsite (cloud-based) data access solutions.

As a response to the forwarded data request to the particular one of the HVAC devices, the processor is configured to receive via the second communication link a data content from the particular one of the HVAC devices. In particular, the processor is configured to control the at least one of the electronic communication circuits, which established the second communication link, to receive via the second communication link a data content from the particular one of the HVAC devices. According to embodiments disclosed herein, the data content comprises configuration data for operating the particular HVAC device and/or operation-related data recorded by the particular HVAC device.

The processor of the electronic access control device is further configured to generate a data response using the data content received from the particular one of the HVAC devices. According to embodiments disclosed herein, the processor is further configured to generate the data response by encrypting the data content from the particular one of the HVAC devices. The processor is further configured to transmit the data response via the first communication link to the external computing device. **In** particular, the processor is configured to control the at least one of the electronic communication circuits, which established the first communication link, to transmit the data response via the first communication link to the external computing device.

In summary, the electronic access control device provides secure access to data content of HVAC devices by controlling data transfer between the untrusted first communication link (to the external computing device) and the trusted second communication link (to the HVAC devices). By checking the authorization of the data request for the particular one of the HVAC devices, the electronic control device of the present disclosure allows data access control on an HVAC device level, which is particularly advantageous in HVAC systems comprising numerous HVAC devices requiring different levels of data access control. For example, data access control on an HVAC device level allows differentiating data access based on the physical or logical placement of an HVAC device. Additionally, or alternatively, data access control on an HVAC device level is defined based on the type of HVAC devices, i.e. data access is granted for a data request only with respect to HVAC sensors, while data access is denied HVAC actuators (and the other way around for a different data request). According to embodiments disclosed herein, data access is controlled for clusters of HVAC devices.

As described above, in order to provide data access control to data content of an HVAC device(s), the electronic access control device is required to be communicatively connected to each HVAC device, via the second communication link. According to further embodiments disclosed herein, the first communication link and the second communication link are established by the same electronic communication circuit. Alternatively, or additionally, the first communication link and the second communication link, are established by a first electronic communication circuit and a second electronic communication circuit, respectively, using the same or different electronic communication technology.

According to embodiments disclosed herein, at least one of the electronic communication circuits comprises a radio communication circuit configured to communicate via a wireless communication link with the external computing device. The radio communication circuit is configured for at least one of: close range interface communication, wireless local area network (WLAN) communication, or cellular mobile radio network communication. Furthermore, at least one of the electronic communication circuits comprises a radio communication circuit configured to communicate via a wireless communication link with one or more of the HVAC devices, the radio communication circuit being configured for at least one of: close range interface communication or wireless local area network (WLAN) communication.

However, there are use cases when a wireless communication link with one or more of the HVAC devices is not feasible (e.g. HVAC devices located in areas where a radio communication signals cannot reach and/or penetrate), is not desirable (e.g. due to data privacy or electromagnetic radiation concerns, such as medical facilities having sensitive equipment) or is not economical (e.g. HVAC devices which do not have a radio communication circuits integrated, unjustifiable costs and effort of wireless infrastructure). It must be emphasized that, since data access control is implemented in the electronic access control device and not in the HVAC devices, the second communication link between the electronic access control device and the HVAC devices is a potential attack surface for attempts of unauthorized access to data content from the HVAC devices by circumventing the data access control of the electronic access control device (e.g. an HVAC device might not have any data access control implemented and it might provide data to any requestor without authorization). Therefore, it is an object of further embodiments of the electronic access control device disclosed herein to allow data access control to data content of HVAC devices of an HVAC system without the risk of unauthorized access to data content directly from the HVAC devices.

This object is addressed by further embodiments of the electronic access control device disclosed herein, wherein at least one of the electronic communication circuits comprises a wire-based communication circuit configured to communicate via a wired communication link with one or more of the HVAC devices. According to embodiments disclosed herein, the wire-based communication circuit comprises at least one of: a serial communication bus, a parallel communication bus, an Ethernet communication circuit.

In order to allow connecting a plurality of HVAC devices by wired communication links to one or more electronic access control devices, without a dedicated wire connecting each HVAC device, according to further embodiments of the electronic access control device, the wire-based communication circuit comprises at least two communication interfaces configured for daisy chaining. In particular, the wire-based communication circuit comprises a first communication interface configured to communicate via a wired communication link with one or more of the HVAC devices and a second communication interface configured to communicate via a wired communication link with a further electronic access control device.

Having established that there are use cases when a wired communication between the electronic access control device and the HVAC devices is preferred and advantageous, there are certain use cases when a wired communication between the electronic access control device and the external computing device is not desirable (e.g. when the location of the HVAC devices is too remote for a wired communication link). Therefore, it is an object of further embodiments of the electronic access control device disclosed herein to allow data access control to data content of HVAC devices of an HVAC system without the risk of unauthorized access to data content directly from the HVAC devices and at the same time providing availability to data content even to remotely located HVAC devices.

This object is addressed by further embodiments of the electronic access control device disclosed herein, wherein the at least one of the electronic communication circuits comprises a wire-based communication circuit configured to communicate via a wired communication link with one or more of the HVAC devices and in addition at least one radio communication circuit configured to communicate via a wireless communication link with the external computing device. In contrast to the second communication link, data requests via the first communication link are checked/ authorized by the electronic access control device. Therefore, having a wireless communication for the first communication link does not pose the same security risk as that mentioned above with respect to the second communication link. Hence, embodiments of the electronic access control device, wherein the first communication link is a wireless communication link and the second communication link is a wired communication link are particularly advantageous for use cases when data security is of high concern but at the same time wired connectivity to the external computing device is undesirable. According to embodiments disclosed herein, the radio communication circuit comprises at least one of:
- A Wide Area Network communication circuit. According to embodiments disclosed herein, in order to minimize the electrical energy requirements of the electronic communication circuit, the radio communication circuit comprises a Low Power Wide Area Network LPWAN communication circuit (such as Narrowband Internet of Things NB-loT, Long Range LoRa/ LoRaWAN, SigFox, or Long Term Evolution Category M1 LTECatM1);
- A short range wireless communication circuit (such as Bluetooth low energy, Thread and/or Zigbee); and/ or
- A close-range wireless communication circuit (such as Radio Frequency Identification RFID or a Near Field Communication NFC).

A particular advantage of a Wide Area Network communication circuit - as compared to a short- and a close- range wireless communication circuit - is that a Wide Area Network communication circuit enables a direct communication with a remotely located external computing device (e.g. a cloud server).

While embodiments of the electronic access control device, wherein the first communication link is a wireless communication link and the second communication link is a wired communication link provide a great balance between secure data access control and data availability (even to remote HVAC devices), supplying electronic access control devices with electrical power in remote locations poses difficulties in certain use cases (e.g. additional electrical infrastructure might be required), often requiring additional electrical infrastructure). Therefore, it is an object of further embodiments of the electronic access control device disclosed herein to allow data access control to data content of HVAC devices of an HVAC system without the risk of unauthorized access to data content of the HVAC devices and at the same time providing availability to data content even to remotely located HVAC devices while minimizing the needs for additional infrastructure.

This object is addressed by further embodiments of the electronic access control device disclosed herein, wherein the electronic access control device further comprises an electrical energy buffer (such as a battery) coupled to the wire-based communication circuit to harvest energy via the wire-based communication circuit from one or more HVAC devices. Accordingly, the wire-based communication circuit comprises a Power over Ethernet PoE, a Single Pair Ethernet SPE (in particular with (such Power over Data Line PoDL support) communication circuit or other suitable circuit configured to transmit both data and electrical energy over the same wired communication link. Furthermore, the electrical energy buffer is connected to the radio communication circuit to power the radio communication circuit. Harvesting energy via the wire-based communication circuit from communication interface(s) of one or more HVAC devices is advantageous since it allows deployment of electronic access control devices even without additional electrical infrastructure making use of electrical energy provided by existing communication interfaces of HVAC devices.

According to further embodiments disclosed herein, the processor is further configured to receive via the second communication link data reports and/or data content from the HVAC devices. The data reports comprise data content generated periodically by the HVAC device, in particular data content generated periodically without a corresponding data request. The processor of the electronic access control device is further configured to store the data reports linked to a time stamp in a data store of the electronic access control device. Periodically and/or upon a data request, a collection of time stamped data reports stored in the data store of the electronic access control device are transmitted via the first communication link to the external computing device. The data reports comprise configuration data of HVAC devices and/or operation-related data (such as operational parameters) recorded by the HVAC devices. In an embodiment, at least some of the operational data values relate to operational parameters of an electric motor of an HVAC actuator, the operational parameters of the electric motor relating to: motor current of the electric motor, voltage levels of a power supply of the electric motor, temperature of the electric motor, and/or movement of the electric motor. The operational parameters of the electric motor relating to movement include: number of rotations, number of changes of direction, powered-on operating time, active operating time, number of starts, number of stops, and/or start/stop ratio. In a further embodiment, at least some of the operational data values relate to positions of actuated parts actuated by HVAC actuators. In an embodiment, at least some of the operational data values relate to sensor measurements values regarding a fluid moving through a valve controlled by an HVAC actuator, including: flow rate, temperature values, and/or differential pressure values.

Despite minimizing the electrical energy requirements of the electronic communication circuit, there are use cases when the electrical energy that the electrical energy buffer can harvest from the HVAC devices via the wire-based communication circuit is not sufficient to continuously power the radio communication circuit and continuously maintain the wireless communication link with the external computing device. The electrical energy that the electrical energy buffer can harvest from the HVAC devices is dependent on the particular HVAC device and its wire-based communication interface. Hence it is a further objective of embodiments of the electronic access control device disclosed herein to significantly reduce the input power requirements - in particular the required supply of electric current - without compromising the availability of the data content from the HVAC devices. In particular, it is a further objective of embodiments disclosed herein to enable supplying the electronic access control device with electric energy from a variety of wire-based communication interfaces of HVAC devices, even those which are not able to provide sufficient electric power respectively current to continuously power the radio communication circuit of the electronic access control device. This object is addressed by further embodiments of the electronic access control device disclosed herein, wherein the processor is further configured to determine an energy level of an electrical energy buffer of the electronic access control device, and to transmit at least a portion of the collection of time stamped data reports depending on the energy level being above a set minimum energy threshold. In other words, the electronic access control device is configured to buffer data reports and transmit them to the external computing device whenever the electrical energy buffer can provide sufficient energy for the radio communication circuit to do so. Such embodiments are particularly advantageous since they allow a secure data access control to a broad range of HVAC devices installed in a wide array of locations and provide a high level of data availability in a variety of operating conditions, such as reduced availability of electric energy.

According to further embodiments disclosed herein, the processor of the electronic access control device is further configured to access via the second communication link a web server executing on one of the HVAC devices, in particular for accessing data content stored by the HVAC devices. In particular, the electronic access control device is configured to allow access to a web server executing on one of the HVAC devices (connected by the second communication link) to an external computing device via the first communication link I.

In order to simplify identification, according to further embodiments disclosed herein, the electronic access control device further comprises a visual code provided on an external surface of a housing of the electronic access control device, the visual code encoding a device identifier associated with the electronic access control device. In particular, the visual code is provided as a machine readable visual code (such as a 1 or 2-dimensional barcode), readable by a reading device (such as a barcode reader or a camera) compromised by and/or communicatively connected to the external computing device. The processor is further configured to receive via the first communication link a communication request from the external computing device, and to check whether a device identifier included in the communication request matches the device identifier encoded by the visual code.

According to a further aspect of the electronic access control device disclosed herein, the processor is configured to generate augmented reality data for the particular one of the HVAC devices, using data content received from the particular one of the HVAC devices. The processor is further configured to include the augmented reality data in the data response for the external computing device for rendering of the augmented reality data by the external computing device. According to an embodiment, the rendering of the augmented reality data comprises an overlay to be presented as a layer on a video image and/or visual representation of the particular HVAC device, in particular an overlay to be presented over a live recording of the HVAC device. Generating of augmented reality data by the electronic access control device is advantageous as it allows augmented reality rendering (by the external computing device) even in the absence of a remote data connection, enabling augmented reality applications even in remote/ isolated locations with no internet access.

According to a further aspect of the electronic access control device disclosed herein, the data request comprises a data package and the electronic access control device is configured to forward the data package to the particular HVAC device (as part of the data request) upon affirmative authorization of the data request. The data package comprises configuration data/values for operating the particular HVAC device and/or a software package (such as a software update/patch). Accordingly, the HVAC devices are configured to receive the data package via the second communication link II from the electronic access control device and store/ apply said configuration data/values and/or software update/patch.

In addition to an electronic access control device, the present invention also relates to a method for controlling data access to Heating, Ventilating and Air Conditioning HVAC devices of an HVAC system, the method comprising the steps:
- providing an electronic access control device comprising a plurality of electronic communication circuits and a processor connected to the electronic communication circuits;
- at least one of the electronic communication circuits of the electronic access control device establishing a first communication link with an external computing device;
- at least one of the electronic communication circuits of the electronic access control device establishing a second communication link with one or more of the HVAC devices;
- the electronic access control device receiving from the external computing device via the first communication link a data request directed to a particular one of the HVAC devices;
- the electronic access control device checking authorization of the data request;
- the electronic access control device forwarding the data request via the second communication link to the particular one of the HVAC devices upon affirmative authorization of the data request;
- the electronic access control device receiving via the second communication link a data content from the particular one of the HVAC devices;
- the electronic access control device generating a data response, using the data content; and
- the electronic access control device transmitting the data response via the first communication link to the external computing device.

In addition to an electronic access control device, the present invention also relates to a computer program product, comprising instructions, which when executed by a processor of an electronic access control device, the electronic access control device comprising a plurality of electronic communication circuits and a processor connected to the electronic communication circuits, causes the electronic access control device to carry out the method for controlling data access to HVAC devices of an HVAC system according to one of the embodiments disclosed herein.

### Brief Description of the Drawings

The present invention will be explained in more detail, by way of example, with reference to the drawings in which:
- Figure 1:: shows a block diagram illustrating schematically an electronic access control device communicating with a plurality of HVAC devices of an HVAC system and with an external computing device via a first respectively second communication link, according to the present invention;
- Figure 2:: shows a block diagram illustrating schematically an HVAC device that includes an actuated part, measurement sensors and a controller comprising a data store, a processor and a communication module;
- Figure 3:: shows a block diagram illustrating schematically an electronic access control device communicating with a plurality of HVAC devices of an HVAC system and with an external computing device via a first respectively second communication link, according to a further embodiment of the present invention, wherein the first communication link is a wireless communication link and the second communication link is a wired communication link;
- Figure 4:: shows a block diagram illustrating schematically a particular embodiment of the electronic access control device communicating with a plurality of HVAC actuators of an HVAC system and with an external computing device, in particular a mobile computing device and a cloud server using a plurality of radio communication circuits;
- Figure 5:: shows a block diagram illustrating schematically a plurality of electronic access control devices arranged in a daisy chain type configuration;
- Figure 6:: shows a sequence diagram illustrating an exemplary sequence of steps for controlling data access to HVAC devices of an HVAC system using an electronic access control device;
- Figure 7:: shows a sequence diagram illustrating a further sequence of steps for controlling data access to HVAC devices of an HVAC system using an electronic access control device;
- Figure 8:: shows a sequence diagram illustrating a further sequence of steps for controlling data access to HVAC devices of an HVAC system using an electronic access control device, wherein augmented reality data is generated using data content received from the HVAC device(s); and
- Figure 9:: shows a sequence diagram illustrating a further sequence of steps for controlling data access to HVAC devices of an HVAC system using an electronic access control device, wherein the data request comprises a data package for the particular HVAC device.

### Detailed Description of the Preferred Embodiments

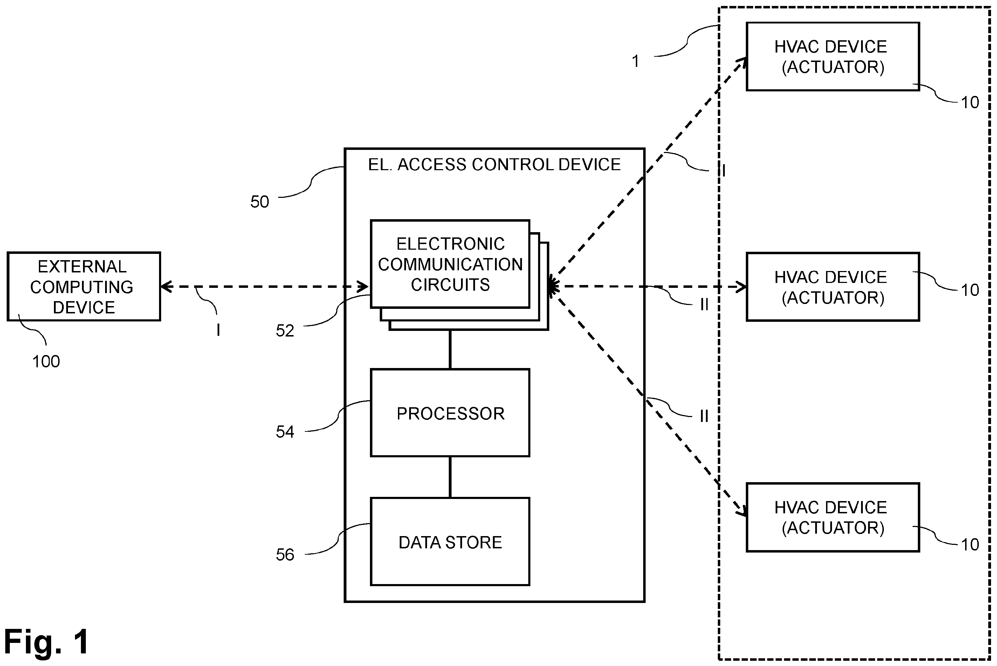

As illustratively shown on figure 1, the electronic access control device 50 comprises a plurality of electronic communication circuits 52 and a processor 54 connected to the electronic communication circuits 52.

In Figure 1, reference numeral 1 refers to one or more HVAC systems. The HVAC systems 1 include a plurality of HVAC devices 10, including motorized HVAC devices, such as HVAC actuators, valves, dampers, pumps and fans, and other devices connected to the HVAC system 1, such as sensors including flow sensors, pressure sensors, temperature sensors, rotation sensors, position sensors, humidity sensors, etc. The HVAC devices 10 are configured to store and/or record configuration, respectively operation-related data and transmit data content comprising a subset or all of said configuration and/or operation-related data to the electronic access control device 50 upon receipt of a data request therefrom.

One of the electronic communication circuits 52 of the electronic access control device 50 is configured to establish a first communication link I and communicate with an external computing device 100 via said first communication link I. As illustrated on figure 1, the external computing device 100 is separate from the HVAC system 1.

Furthermore, one of the electronic communication circuits 52 of the electronic access control device 50 is configured to establish a second communication link II and communicate with one or more of the HVAC devices 10 via said second communication link II.

The electronic access control device 50 further comprises a data store 56 connected to the processor 54, the data store 56 being configured for storing identification information and/or access rights data and/or data reports and/or data content from the HVAC devices.

Depending on the embodiment, the processor 54 is implemented as a programmed processor, including data and program memory, or another programmable logic unit, e.g. an application specific integrated circuit (ASIC). The processor 54 of the electronic access control device 50 is configured to receive a data request from the external computing device 100 via the first communication link I. In particular, the processor 54 is configured to control the at least one of the electronic communication circuits 52, which established the first communication link I, to receive a data request from the external computing device 100. The data request is directed to a particular one of the HVAC devices 10.

Furthermore, the processor 54 of the electronic access control device 50 is configured to check authorization of the data request for the particular one of the HVAC devices. Upon affirmative authorization of the data request for the particular HVAC device, the processor 54 of the electronic access control device 50 is configured to forward the data request via the second communication link II to the particular one of the HVAC devices 10 upon affirmative authorization of the data request. In particular, the processor 54 is configured to control the at least one of the electronic communication circuits 52, which established the second communication link II, to forward the data request via the second communication link II to the particular one of the HVAC devices 10.

As a response to the forwarded data request to the particular one of the HVAC devices 10, the processor 54 is configured to receive via the second communication link II a data content from the particular one of the HVAC devices 10. In particular, the processor 54 is configured to control the at least one of the electronic communication circuits 52, which established the second communication link II, to receive via the second communication link II a data content from the particular one of the HVAC devices 10.

Furthermore, the processor 54 is configured to generate a data response using the data content received from the particular one of the HVAC devices 10 and to transmit the data response via the first communication link I to the external computing device 100. In particular, the processor 54 is configured to control the at least one of the electronic communication circuits 52, which established the first communication link I, to transmit the data response via the first communication link I to the external computing device 100.

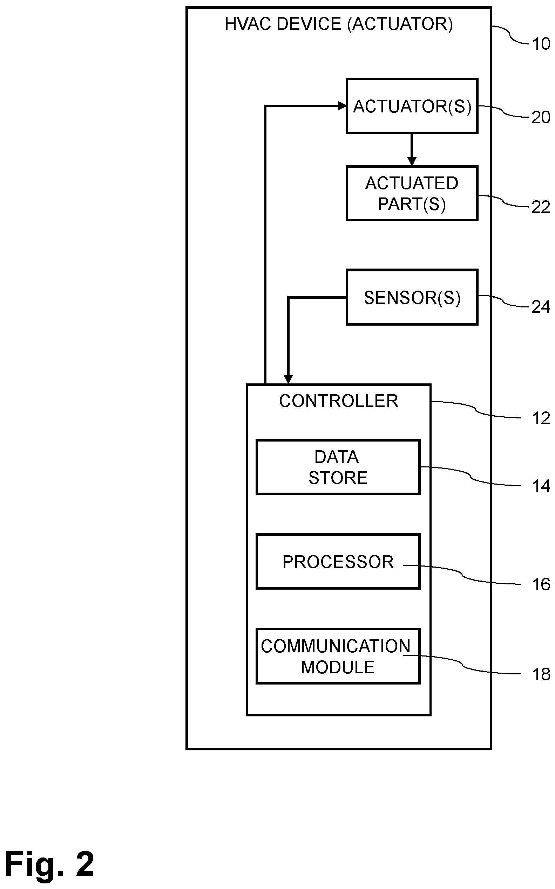

Figure 2 shows a block diagram illustrating schematically an exemplary HVAC device 10. The HVAC device 10 comprises actuators 20 (such an electric motor), sensor(s) 24 and a controller 12. The actuators 20 are mechanically coupled to an actuated part 22, such as a valve member, e.g. a flap, disc, ball, or a damper blade, for moving the actuated part.

The controller 12 comprises a processor 16 with an electronic circuit configured to control the respective HVAC device 10. Depending on the embodiment, the electronic circuits of the controller 12 are implemented as programmed processors, including data and program memory, or another programmable logic unit, e.g. an application specific integrated circuit (ASIC).

As illustrated in Figure 2, the controller 12 of the HVAC devices 10 further comprise a communication module 18 configured for data communication with an electronic access control device 50 via the second communication link II.

In an embodiment, the communication module 18 is further configured to communicate with other HVAC devices 10, e.g. through a communication bus, a LAN and/or a WLAN.

As illustrated in Figure 2, the controller 12 is connected to various internal and/or external sensors 24, e.g. flow sensors and/or temperature sensors and/or other sensors for sensing and generating different types operational parameters of the HVAC devices 10 or their actuator(s) 20, e.g. motor current, motor torque, motor voltage levels, motor position, motor speed, motor temperature, motor movement direction, motor rotations, motor movement duration, duration of motor operation, motor turn on/off event or status, etc., or of the HVAC system 1, e.g. system pressure in a transporting system, differential pressure of valves and dampers, speed of a pump or fan, positions of actuated parts 22, such as valve or damper positions, rotation angles, orifice degrees, temperatures (fluid, ambient air, motor); humidity, air sensors such as air quality sensors, fluid sensors such as ph-Sensors, fluid concentration sensors (glycol) etc.

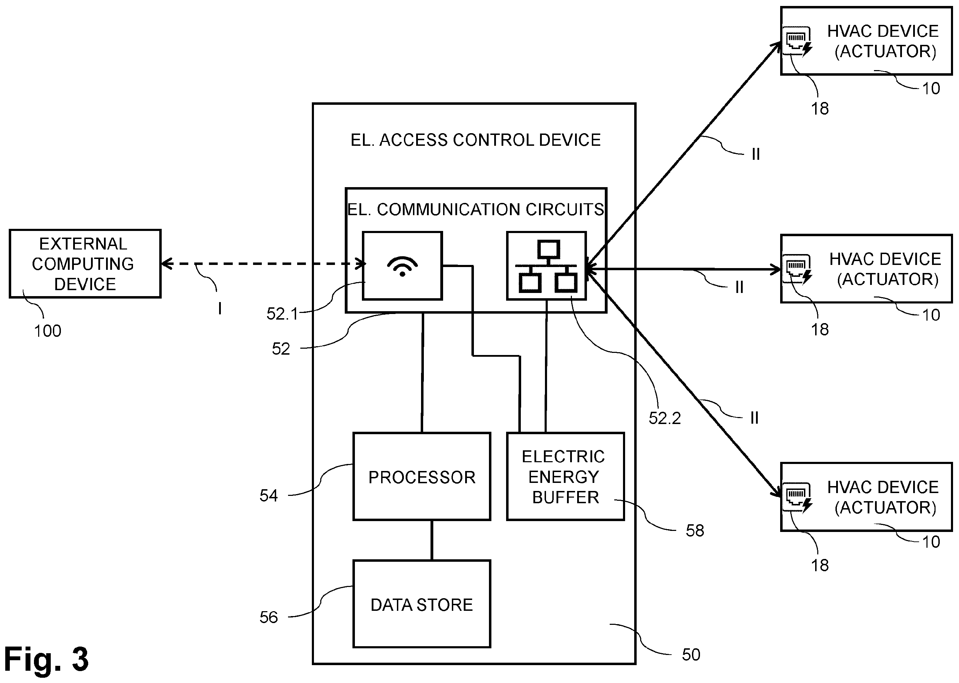

Figure 3 shows a block diagram illustrating schematically an electronic access control device 50 according to a preferred embodiment of the present invention. The electronic access control device 50 comprises a plurality of electronic communication circuits 52, a processor 54 connected to the electronic communication circuits 52, an electrical energy buffer 58 and a data store 56. The plurality of electronic communication circuits 52 include a radio communication circuit 52.1 and a wire-based communication circuit 52.2. The electrical energy buffer 58 (such as a battery) is coupled to the wire-based communication circuit 52.2 to harvest energy via the wire-based communication circuit 52.2 from one or more HVAC devices 10. Accordingly, the wire-based communication circuit 52.2 comprises a Power over Ethernet communication circuit or other suitable circuit configured to transmit both data and electrical energy over the same wired communication link. Furthermore, the electrical energy buffer 58 is connected to the radio communication circuit 52.1 to power the radio communication circuit 52.1. Corresponding to the wire-based communication circuit 52.2 configured to harvest electrical energy from one or more HVAC devices, the HVAC devices 10 comprise respective communication interfaces 18 configured to provide electrical energy (in addition to being configured to communicate with the electronic access control device 50 via the second communication link II).

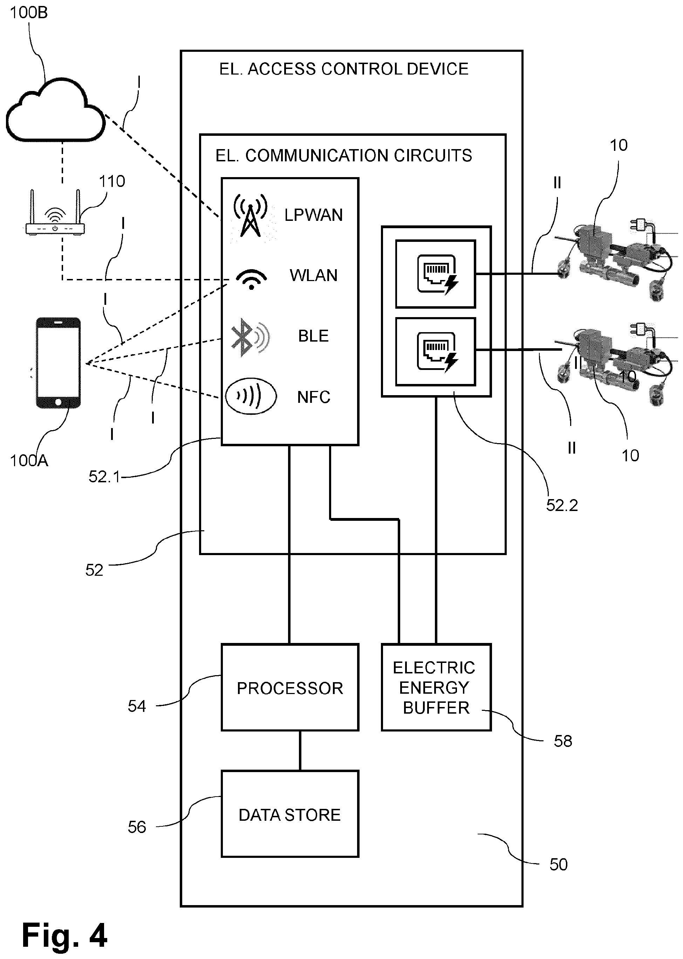

Figure 4 shows a block diagram illustrating schematically a particular embodiment of the electronic access control device 50 communicating with a plurality of HVAC actuators 10 and external computing devices 100. As illustrated, the electronic access control device 50 is configured to establish the first communication link I with a remote server 100B (as a particular type of external computing device) using a plurality of radio communication circuits 52.1, in particular a Low Power Wide Area Network LPWAN communication circuit (enabling a direct communication) and/or a Wireless Local Area Network WLAN communication circuit (enabling a communication with the remote server 100B via a corresponding WLAN router 110). Furthermore, the electronic access control device 50 is configured to establish the first communication link I with a mobile computing device 100A (as a particular type of external computing device) using a plurality of radio communication circuits 52.1, in particular a Near Field Communication NFC and/or a Bluetooth Low Energy BLE and/or a Wireless Local Area Network WLAN communication circuit. In order to communicate with HVAC actuators 10, the electronic access control device 50 is configured to establish the first communication link II using a Power over Ethernet PoE and/or an MP-Bus communication circuits 52.2. MP-Bus is a serial communication bus suitable for both data communication and transmission of electrical energy (in particular at 24V).

According to particular embodiments, the electronic access control device 50 is configured to automatically select one or more of the communication circuits 52 in accordance with the particular HVAC device 10 and/or in accordance with the particular external computing device 100, For example, the electronic access control device 50 is configured to automatically select a Low Power Wide Area Network LPWAN communication circuit or a Wireless Local Area Network WLAN communication circuit to communicate with a remote server 100B while selecting a Near Field Communication NFC and/or a Bluetooth Low Energy BLE and/or a Wireless Local Area Network WLAN communication circuit for communicating with a mobile computing device 100A.

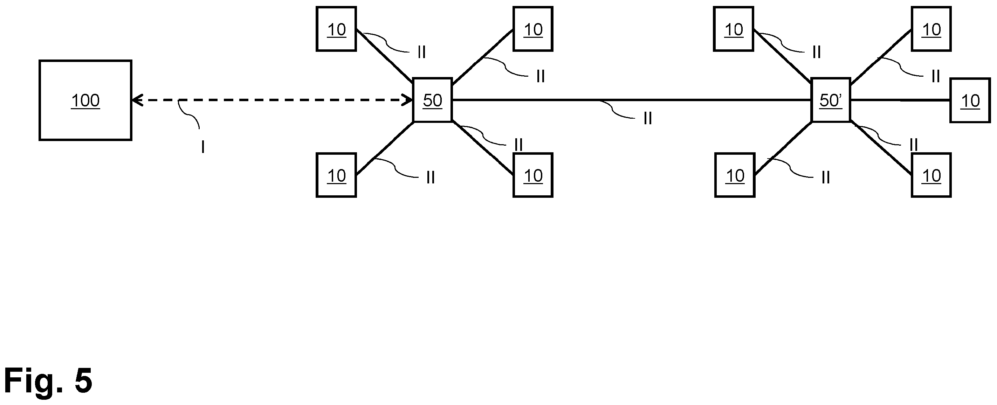

Figure 5 shows a block diagram illustrating schematically a plurality of electronic access control devices 50, 50' arranged in a daisy chain type configuration. In order to allow connecting a plurality of HVAC devices 10 by wired communication links, without a dedicated wire connecting each HVAC device 10, as shown on figure 5, the wire-based communication circuit 52.2 of at least one of the electronic access control devices 50 comprises at least two communication interfaces configured for daisy chaining. In particular, the wire-based communication circuit 52.2 comprises a first communication interface configured to communicate via a wired communication link with one or more of the HVAC devices 10 and a second communication interface configured to communicate via a wired communication link with a further electronic access control device 50'. Accordingly, the processor 54 of the electronic access control device 50 is configured to forward data requests to the further electronic access control device 50' via the second communication link II, whenever the data request is directed to any HVAC device 10 connected to the further electronic access control device 50'. In other words, the 50 acts as a router/ bridge for data requests related to HVAC devices 10 connected to the further electronic access control device 50'.

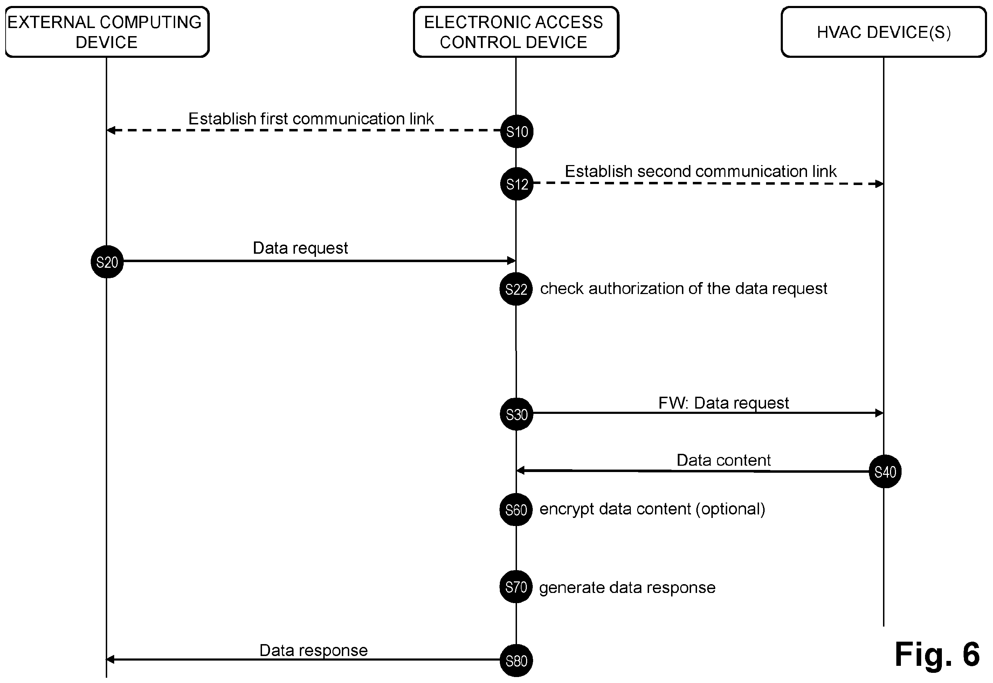

Turning now to figure 6, an exemplary sequence of steps for controlling data access to HVAC devices 10 of an HVAC system 1 using an electronic access control device 50 shall be described.

In preparatory step S10, at least one of the electronic communication circuits 52 of the electronic access control device 50 establish a first communication link I with an external computing device 100. According to embodiments disclosed herein, the first communication link I with an external computing device 100 is established periodically and/or upon request by the external computing device 100 and/or upon request by an operator and/or upon receipt of data content satisfying certain criteria.

In further preparatory step S12 -subsequent, preceding or simultaneous to step S10, at least one of the electronic communication circuits 52 of the electronic access control device 50 establish a second communication link II with one or more of the HVAC devices 10. According to embodiments disclosed herein, the second communication link II with one or more of the HVAC devices 10 is established periodically and/or upon request by one or more of the HVAC devices 10 and/or upon request by an operator and/or upon detection of operational data by one or more of the HVAC devices 10 satisfying certain criteria.

In step S20, the electronic access control device 50 receives a data request from the external computing device 100 via the first communication link I, the data request being directed to a particular one of the HVAC devices 10.

In step S22, the processor 54 of the electronic access control device 50 checks authorization of the data request. According to embodiments disclosed herein, the processor 54 checks authorization of the data request by verifying access control data included in the data request, using symmetric or asymmetric cryptography. According to further embodiments disclosed herein, the electronic access control device 50 further comprises a data store 56 having stored therein identification information and the processor 54 is configured to check authorization of the data request for the particular one of the HVAC devices by comparing identification information included in the data request to the identification information stored in the data store 56. According to even further embodiments disclosed herein, the electronic access control device 50 further comprises a data store 56 having stored therein access rights data and the processor 54 is configured to check authorization of the data request for the particular one of the HVAC devices using the access rights data stored in the data store 56 and access credentials included in the data request.

Upon affirmative authorization of the data request, in step S30, the processor 54 of the electronic access control device 50 forwards the data request via the second communication link II to the particular one of the HVAC devices 10 which the data request was directed to.

In a step S40, the electronic access control device 50 receives - via the second communication link II - a data content from the particular one of the HVAC devices 10 sent as a response to the forwarded data request. According to embodiments disclosed herein, the data content comprises configuration data for operating the particular HVAC device 10 and/or operation-related data recorded by the particular HVAC device 10. In step S40, the HVAC device 10 generates data content including one or more operational data values determined and stored by the HVAC device 10. The generating of the data content is executed on an ongoing or periodic basis or upon request from an internal or external control or application program. In an embodiment, the data content comprises a variable part which includes a defined set of different operational data values, including sensor measurement values, counter values, and other operational data, and optionally local data processing results. The variable part of the data content is continuously or periodically updated by the HVAC device 10. In an embodiment, the data content further comprises a static part which includes device identification information, e.g. actuator identification information, such as a serial number and actuator type or model indicators, and configuration data, e.g. version numbers of circuits, firmware, software, installed software components, etc.

In a step S60 of a particular embodiment, the processor 54 of the electronic access control device 50 encrypts the data content received from the particular one of the HVAC devices 10.

In subsequent step S70, the processor 54 of the electronic access control device 50 generates a data response using the data content as received from the particular one of the HVAC devices 10 or as encrypted in step S60.

Thereafter, in step S80, the processor 54 of the electronic access control device 50 transmits the data response via the first communication link I to the external computing device 100. According to particular use case(s), the external computing device 100 generates remote diagnoses for an HVAC device 10, e.g. an HVAC actuator, using data responses received from the electronic access control device 50. In an embodiment, the external computing device 100 further generates control values for the particular HVAC device 10 using data response(s) from a plurality of HVAC devices 10. Such control values are then transmitted to the HVAC devices 10 as part of a data request comprising a data write instruction, the electronic access control device 50 of particular embodiments being further configured to transmit said control values to the HVAC devices 10 and the HVAC devices 10 being configured to receive control values from the electronic access control device 50 and store said control values received.

Furthermore, the external computing device 100 generates and stores key performance indicators KPI for individual HVAC devices 10 and/or for groups of HVAC devices 10, using the received data responses.

In the present context, diagnosis goes beyond mere fault detection based on a direct comparison of a sensor reading to predetermined threshold value, but rather relates to the identification of the nature and probable cause of problems, failures, malfunctioning, and critical conditions of HVAC devices, 10 and associated HVAC system components, based on an analysis of a plurality of HVAC data responses received from the electronic access control device 50. For some diagnoses (and control values), the external computing device 100 further considers and uses location information of the HVAC devices 10. Depending on embodiment and/or configuration, the location information is included in the data reporting responses or the external computing device 100 determines the (static) location information based on device identification information included in the data responses, e.g. using a location look-up table. The location information includes coordinates, location names, address, identification of an HVAC system 1, identification of a building, room, and/or floor, etc.

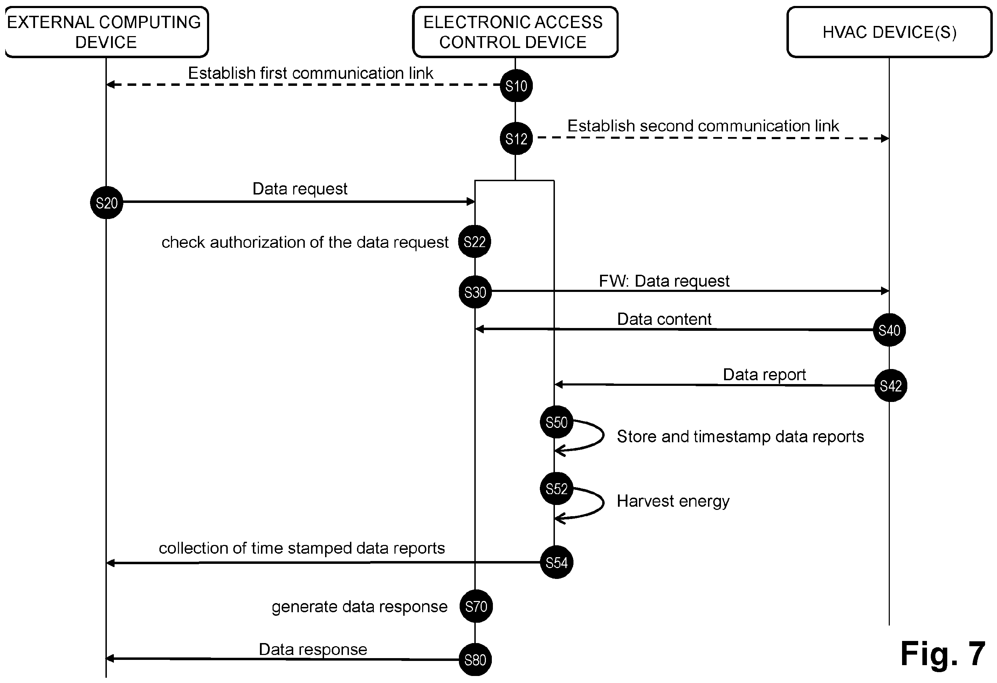

Figure 7 shows a sequence diagram illustrating a further sequence of steps for controlling data access to HVAC devices 10 of an HVAC system 1 using an electronic access control device 50 according to a further embodiment disclosed herein.

In a step S42, the processor 54 receives - via the second communication link II - data reports from the HVAC devices 10. The data reports comprise data content generated periodically by the HVAC device 10, in particular data content generated periodically without a corresponding data request. The communication of the data reporting message is executed on a periodic basis or upon request from an internal or external control or application program, e.g. an external data request.

In step S50, the processor 54 stores the data reports and links them to a time stamp in a data store 56 of the electronic access control device 50.

In step S52, the electronic access control device 50 harvests electrical energy via the second communication link II from the HVAC device 10 into its electrical energy buffer 58 in order to increase the energy level of the electrical energy buffer 58 above a set minimum energy threshold sufficient to provide sufficient energy for the radio communication circuit 52.1 to transmit a data request to the external computing device 100.

In step 54, periodically and/or upon a data request, and/or whenever an energy level of the electrical energy buffer 58 is above a set minimum energy threshold, a collection of time stamped data reports stored in the data store 56 of the electronic access control device 50 are transmitted via the first communication link I to the external computing device 100. The data reports comprise configuration data of HVAC devices 10 and/or operation-related data (such as operational parameters) recorded by the HVAC devices 10. In an embodiment, at least some of the operational data values relate to operational parameters of an electric motor of an HVAC actuator 20, the operational parameters of the electric motor relating to: motor current of the electric motor, voltage levels of a power supply of the electric motor, temperature of the electric motor, and/or movement of the electric motor. The operational parameters of the electric motor relating to movement include: number of rotations, number of changes of direction, powered-on operating time, active operating time, number of starts, number of stops, and/or start/stop ratio. In a further embodiment, at least some of the operational data values relate to positions of actuated parts 22 actuated by HVAC actuators 20. In an embodiment, at least some of the operational data values relate to measurement values of sensors 24, such as values regarding a fluid moving through a valve controlled by an HVAC actuator 20, including: flow rate, temperature, humidity, air quality, fluid concentration values, and/or differential pressure values.

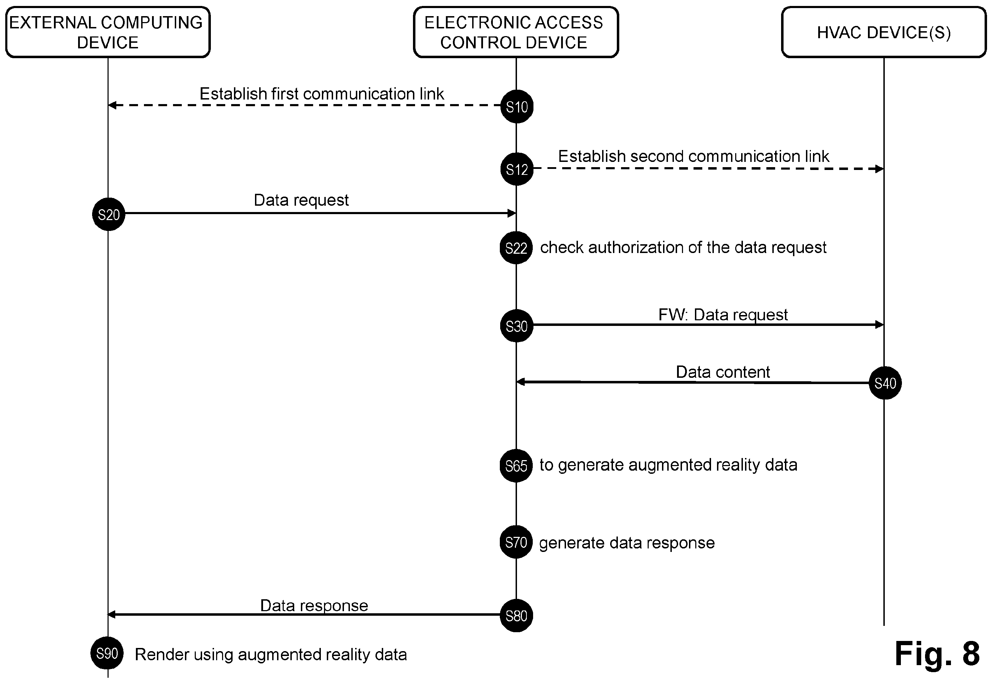

Figure 8 shows a sequence diagram illustrating a further sequence of steps for controlling data access to HVAC devices 10 of an HVAC system 1 using an electronic access control device 50. As illustrated, in a step S65 the processor 54 of the electronic access control device 50 generates augmented reality data for the particular one of the HVAC devices 10 using data content received from the particular one of the HVAC devices 10. Accordingly, in step S70 the processor 54 includes the augmented reality data in the data response for the external computing device 100 for rendering - in step S90 - of the augmented reality data by the external computing device 100. According to an embodiment, the rendering of the augmented reality data comprises an overlay to be presented as a layer on a video image and/or visual representation of the particular HVAC device 10, in particular an overlay to be presented over a live recording of the HVAC device 10.

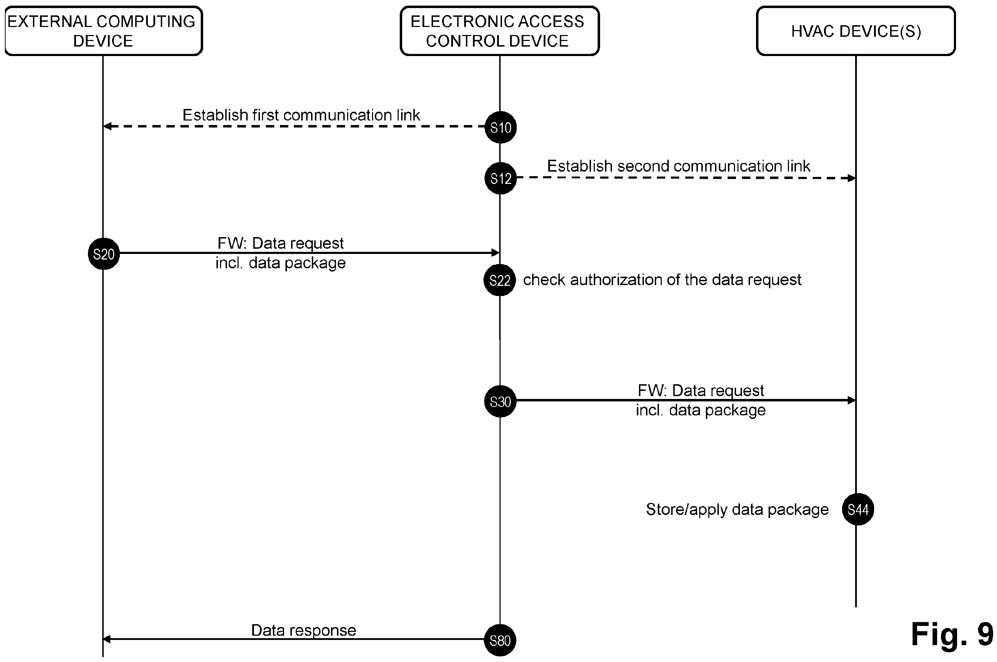

Figure 9 shows a sequence diagram illustrating a further sequence of steps for controlling data access to HVAC devices 10 of an HVAC system 1 using an electronic access control device 50, wherein the data package (as sent by the external computing device 100 and forwarded by the electronic access control device 50) comprises a data package. According to embodiments disclosed herein, the data package comprises configuration data/values for operating the particular HVAC device 10 and/or a software package (such as a software update/patch). In step S44, the HVAC device 10 stores/ applies the configuration data/values and/or software update/patch received (in step S30) as part of the data package.

It should be noted that, in the description, the sequence of the steps has been presented in a specific order, one skilled in the art will understand, however, that the computer program code may be structured differently and that the order of at least some of the steps could be altered, without deviating from the scope of the invention which is defined by the appended claims.

### List of reference numerals

| | |
|---|---|
| HVAC system | 1 |
| HVAC device | 10 |
| controller (of HVAC device) | 12 |
| data store | 14 |
| processor | 16 |
| communication interface | 18 |
| actuator | 20 |
| actuated part | 22 |
| sensor | 24 |
| electronic access control device | 50 |
| electronic communication circuit | 52 |
| radio communication circuit | 52.1 |
| wire-based communication circuit | 52.2 |
| processor (of electronic access control device) | 54 |
| data store | 56 |
| electrical energy buffer | 58 |
| external computing device | 100 |
| mobile computing device | 100A |
| remote (cloud) server | 100B |
| router | 110 |
| first communication link | I |
| second communication link | II |

## Claims

1. An electronic access control device (50) for controlling data access to Heating, Ventilating and Air Conditioning HVAC devices (10) of an HVAC system (1), the electronic access control device (50) comprising a plurality of electronic communication circuits (52) and a processor (54) connected to the electronic communication circuits (52),
wherein at least one of the electronic communication circuits (52) is configured to communicate via a first communication link (I) with an external computing device (100), separate from the HVAC system (1);
at least one of the electronic communication circuits (52) is configured to communicate with one or more of the HVAC devices (10) via a second communication link (II); and
the processor (54) is configured to
receive from the external computing device (100) via the first communication link (I) a data request directed to a particular one of the HVAC devices (10),
check authorization of the data request for the particular one of the HVAC devices (10),
upon affirmative authorization of the data request, forward the data request via the second communication link (II) to the particular one of the HVAC devices (10),
receive via the second communication link (II) a data content from the particular one of the HVAC devices (10),
generate a data response, using the data content, and transmit the data response via the first communication link (I) to the external computing device (100).

2. The electronic access control device (50) of claim 1, wherein the processor (54) is configured to check authorization of the data request by verifying access control data included in the data request, using symmetric or asymmetric cryptography.

3. The electronic access control device (50) of one of claims 1 or 2, wherein the electronic access control device (50) further comprises a data store having stored therein identification information; and the processor (54) is configured to check authorization of the data request by comparing identification information included in the data request to the identification information stored in the data store.

4. The electronic access control device (50) of one of claims 1 to 3, wherein the electronic access control device (50) further comprises a data store having stored therein access rights data; and the processor (54) is configured to check authorization of the data request using the access rights data stored in the data store and access credentials included in the data request.

5. The electronic access control device (50) of one of claims 1 to 4, wherein the processor (54) is further configured to generate the data response by encrypting the data content from the particular one of the HVAC devices (10).

6. The electronic access control device (50) of one of claims 1 to 5, wherein at least one of the electronic communication circuits (52) comprises a radio communication circuit (52.1) configured to communicate via a wireless communication link with the external computing device (100), the radio communication circuit (52.1) being configured for at least one of: close range interface communication, wireless local area network (WLAN) communication, or cellular mobile radio network communication.

7. The electronic access control device (50) of one of claims 1 to 6, wherein at least one of the electronic communication circuits (52) comprises a radio communication circuit (52.1) configured to communicate via a wireless communication link with one or more of the HVAC devices (10), the radio communication circuit (52.1) being configured for at least one of: close range interface communication or wireless local area network (WLAN) communication.

8. The electronic access control device (50) of one of claims 1 to 7, wherein at least one of the electronic communication circuits (52) comprises a wire-based communication circuit (52.2) configured to communicate via a wired communication link with one or more of the HVAC devices (10); at least one of the electronic communication circuits (52) comprises a radio communication circuit (52.1) configured to communicate via a wireless communication link with the external computing device (100); and the electronic access control device (50) further comprises an electrical energy buffer (58), coupled to the wire-based communication circuit (52.2) to harvest energy via the wire-based communication circuit (52.2), and connected to the radio communication circuit (52.1) to power the radio communication circuit (52.1).

9. The electronic access control device (50) of claim 8, wherein the wire-based communication circuit (52.2) comprises at least one of: a serial communication bus, a parallel communication bus, an Ethernet communication circuit, or a Power over Ethernet communication circuit.

10. The electronic access control device (50) of one of claims 8 or 9, wherein the wire-based communication circuit (52.2) comprises at least two communication interfaces configured for daisy chaining.

11. The electronic access control device (50) of one of claims 6 to 8, wherein the radio communication circuit (52.1) comprises at least one of: a Low Power Wide Area Network (LPWAN) communication circuit, , a WLAN communication circuit, a short range wireless communication circuit, and/or a close range wireless communication circuit.

12. The electronic access control device (50) of one of claims 1 to 11, wherein the processor (54) is further configured to receive via the second communication link (II) data reports from the HVAC devices (10); to store the data reports linked to a time stamp in a data store of the electronic access control device (50); and to transmit a collection of time stamped data reports stored in the data store of the electronic access control device (50) via the first communication link (I) to the external computing device (100).

13. The electronic access control device (50) of claim 12, wherein the processor (54) is further configured to determine an energy level of an electrical energy buffer (58) of the electronic access control device (50), and to transmit at least a portion of the collection of time stamped data reports depending on the energy level being above a set minimum energy threshold.

14. The electronic access control device (50) of one of claims 1 to 13, wherein the processor (54) is further configured to access via the second communication link (II) a web server executing on one of the HVAC devices (10).

15. The electronic access control device (50) of one of claims 1 to 14, wherein the electronic access control device (50) further comprises a visual code provided on an external surface of a housing of the electronic access control device (50), the visual code encoding a device identifier associated with the electronic access control device (50); and the processor (54) is further configured to receive via the first communication link (I) a communication request from the external computing device (100), and to check whether a device identifier included in the communication request matches the device identifier encoded by the visual code.

16. The electronic access control device (50) of one of claims 1 to 15, wherein the processor (54) is configured to generate augmented reality data for the particular one of the HVAC devices (10), using data content received from the particular one of the HVAC devices (10), the augmented reality data comprising an overlay to be presented as a layer on a video image and/or visual representation of the particular one of the HVAC devices (10); and to include the augmented reality data in the data response for the external computing device (100) for rendering of the augmented reality data by the external computing device (100).

17. A method for controlling data access to Heating, Ventilating and Air Conditioning HVAC devices (10) of an HVAC system (1) using an electronic access control device (50) comprising a plurality of electronic communication circuits (52) and a processor (54) connected to the electronic communication circuits (52), the method comprising the steps:
- establishing - by at least one of the electronic communication circuits (52) of the electronic access control device (50)- a first communication link (I) with an external computing device (100);
- establishing - by at least one of the electronic communication circuits (52) of the electronic access control device (50) - a second communication link (II) with one or more of the HVAC devices (10);
- receiving - by the electronic access control device - from the external computing device via the first communication link (I) a data request directed to a particular one of the HVAC devices (10);
- checking authorization of the data request for the particular one of the HVAC devices- by the electronic access control device (50);
- forwarding - by the electronic access control device (50) - the data request via the second communication link (II) to the particular one of the HVAC devices (10) upon affirmative authorization of the data request;
- receiving - by the electronic access control device (50) - via the second communication link (II) a data content from the particular one of the HVAC devices (10);
- generating - by the electronic access control device (50) - a data response, using the data content; and
- transmitting - by the electronic access control device (50) - the data response via the first communication link (I) to the external computing device.

18. A computer program product, comprising instructions, which when executed by a processor (54) of an electronic access control device (50), the electronic access control device (50) comprising a plurality of electronic communication circuits (52) connected to the processor (54), causes the electronic access control device (50) to carry out the method for controlling data access to HVAC devices (10) of an HVAC system (1) according claim 17.

## Patentansprüche

1. Elektronische Zugangskontrollvorrichtung (50) zur Steuerung eines Datenzugriffs auf HVAC-Vorrichtungen (10) eines HVAC Systems (1), wobei die elektronische Zugangskontrollvorrichtung (50) eine Vielzahl von elektronischen Kommunikationsschaltungen (52) und einen Prozessor (54) umfasst, der mit den elektronischen Kommunikationsschaltungen (52) verbunden ist,
wobei mindestens eine der elektronischen Kommunikationsschaltungen (52) eingerichtet ist, via eine erste Kommunikationsverbindung (I) mit einer externen Verarbeitungsvorrichtung (100) zu kommunizieren, die von dem HVAC System (1) getrennt ist;
mindestens eine der elektronischen Kommunikationsschaltungen (52) eingerichtet ist, via einer zweiten Kommunikationsverbindung (II) mit einer oder mehreren der HVAC-Vorrichtungen (10) zu kommunizieren; und
der Prozessor (54) eingerichtet ist,
von der externen Verarbeitungsvorrichtung (100) via der ersten Kommunikationsverbindung (I) eine an eine bestimmte der HVAC-Vorrichtungen (10) gerichtete Datenanforderung zu empfangen,
die Autorisierung der Datenanforderung für die bestimmte der HVAC-Vorrichtungen (10) zu prüfen,
bei positiver Autorisierung der Datenanforderung die Datenanforderung via die zweite Kommunikationsverbindung (II) an die jeweilige HVAC-Vorrichtung (10) weiterzuleiten,
via die zweite Kommunikationsverbindung (II) einen Dateninhalt von der jeweiligen HVAC-Vorrichtung (10) zu empfangen,
eine Datenantwort unter Verwendung des Dateninhalts zu erzeugen und die Datenantwort via die erste Kommunikationsverbindung (I) an die externe Verarbeitungsvorrichtung (100) zu übermitteln.

2. Elektronische Zugangskontrollvorrichtung (50) nach Anspruch 1, wobei der Prozessor (54) eingerichtet ist, die Berechtigung der Datenanforderung zu überprüfen, indem er die in der Datenanforderung enthaltenen Zugangskontrolldaten unter Verwendung symmetrischer oder asymmetrischer Kryptographie verifiziert.

3. Elektronische Zugangskontrollvorrichtung (50) nach einem der Ansprüche 1 oder 2, wobei die elektronische Zugangskontrollvorrichtung (50) ferner einen Datenspeicher umfasst, in dem Identifikationsinformationen gespeichert sind, und der Prozessor (54) eingerichtet ist, die Berechtigung der Datenanforderung durch Vergleichen der in der Datenanforderung enthaltenen Identifikationsinformationen mit den in dem Datenspeicher gespeicherten Identifikationsinformationen zu überprüfen.

4. Elektronische Zugangskontrollvorrichtung (50) nach einem der Ansprüche 1 bis 3, wobei die elektronische Zugangskontrollvorrichtung (50) ferner einen Datenspeicher umfasst, in dem Zugangsberechtigungsdaten gespeichert sind; und der Prozessor (54) eingerichtet ist, die Berechtigung der Datenanforderung unter Verwendung der im Datenspeicher gespeicherten Zugangsberechtigungsdaten und der in der Datenanforderung enthaltenen Zugangsberechtigungsdaten zu prüfen.

5. Die elektronische Zugangskontrollvorrichtung (50) nach einem der Ansprüche 1 bis 4, wobei der Prozessor (54) ferner eingerichtet ist, die Datenantwort durch Verschlüsselung des Dateninhalts von der bestimmten der HVAC-Vorrichtungen (10) zu erzeugen.

6. Elektronische Zugangskontrollvorrichtung (50) nach einem der Ansprüche 1 bis 5, wobei mindestens eine der elektronischen Kommunikationsschaltungen (52) eine Funkkommunikationsschaltung (52.1) umfasst, die eingerichtet ist, via eine drahtlose Kommunikationsverbindung mit der externen Verarbeitungsvorrichtung (100) zu kommunizieren, wobei die Funkkommunikationsschaltung (52.1) für mindestens eine der folgenden Möglichkeiten eingerichtet ist: Kommunikation via Nahbereich-Schnittstelle, Kommunikation via drahtloses lokales Netzwerk (WLAN) oder Kommunikation via zellulares Mobilfunknetzwerk.

7. Elektronische Zugangskontrollvorrichtung (50) nach einem der Ansprüche 1 bis 6, wobei mindestens eine der elektronischen Kommunikationsschaltungen (52) eine Funkkommunikationsschaltung (52.1) umfasst, die eingerichtet ist, via eine drahtlose Kommunikationsverbindung mit einer oder mehreren HVAC-Vorrichtungen (10) zu kommunizieren, wobei die Funkkommunikationsschaltung (52.1) für mindestens eine der folgenden Möglichkeiten eingerichtet ist: Kommunikation via Nahbereich-Schnittstelle oder Kommunikation via drahtloses lokales Netzwerk (WLAN).

8. Elektronische Zugangskontrollvorrichtung (50) nach einem der Ansprüche 1 bis 7, wobei mindestens eine der elektronischen Kommunikationsschaltungen (52) eine drahtgebundene Kommunikationsschaltung (52.2) umfasst, die eingerichtet ist, via eine drahtgebundene Kommunikationsverbindung mit einer oder mehreren der HVAC-Vorrichtungen (10) zu kommunizieren; mindestens eine der elektronischen Kommunikationsschaltungen (52) umfasst eine Funkkommunikationsschaltung (52. 1), die eingerichtet ist, via eine drahtlose Kommunikationsverbindung mit der externen Verarbeitungsvorrichtung (100) zu kommunizieren; und die elektronische Zugangskontrollvorrichtung (50) umfasst ferner einen elektrischen Energiepuffer (58), der mit der drahtgebundenen Kommunikationsschaltung (52.2) gekoppelt ist, um via die drahtgebundene Kommunikationsschaltung (52.2) Energie zu gewinnen, und der mit der Funkkommunikationsschaltung (52.1) verbunden ist, um die Funkkommunikationsschaltung (52.1) zu versorgen.

9. Elektronische Zugangskontrollvorrichtung (50) nach Anspruch 8, wobei die drahtgebundene Kommunikationsschaltung (52.2) mindestens eines der folgenden Elemente umfasst: einen seriellen Kommunikationsbus, einen parallelen Kommunikationsbus, eine Ethernet-Kommunikationsschaltung oder eine Powerover-Ethernet-Kommunikationsschaltung.

10. Elektronische Zugangskontrollvorrichtung (50) nach einem der Ansprüche 8 oder 9, wobei die drahtgebundene Kommunikationsschnittstelle (52.2) mindestens zwei Kommunikationsschnittstellen umfasst, die für Daisy-Chaining eingerichtet sind.

11. Die elektronische Zugangskontrollvorrichtung (50) nach einem der Ansprüche 6 bis 8, wobei die Funkkommunikationsschaltung (52.1) mindestens eine der folgenden Schaltungen umfasst: eine Low Power Wide Area Network (LPWAN)-Kommunikationsschaltung, eine WLAN-Kommunikationsschaltung, eine drahtlose Kurzstrecken-Kommunikationsschaltung und/oder eine drahtlose Nahbereich-Kommunikationsschaltung.

12. Elektronische Zugangskontrollvorrichtung (50) nach einem der Ansprüche 1 bis 11, wobei der Prozessor (54) ferner eingerichtet ist, via die zweite Kommunikationsverbindung (II) Datenberichte von den HVAC-Vorrichtungen (10) zu empfangen; die mit einem Zeitstempel verknüpften Datenberichte in einem Datenspeicher der elektronischen Zugangskontrollvorrichtung (50) zu speichern; und eine Sammlung von in dem Datenspeicher der elektronischen Zugangskontrollvorrichtung (50) gespeicherten, mit Zeitstempeln versehenen Datenberichten via die erste Kommunikationsverbindung (I) an die externe Verarbeitungsvorrichtung (100) zu übertragen.

13. Elektronische Zugangskontrollvorrichtung (50) nach Anspruch 12, wobei der Prozessor (54) ferner eingerichtet ist, einen Energiepegel eines elektrischen Energiepuffers (58) der elektronischen Zugangskontrollvorrichtung (50) zu bestimmen und mindestens einen Teil der Sammlung von mit Zeitstempeln versehenen Datenberichten in Abhängigkeit von dem Energiepegel zu übermitteln, der oberhalb einer eingestellten Mindestenergieschwelle liegt.

14. Die elektronische Zugangskontrollvorrichtung (50) nach einem der Ansprüche 1 bis 13, wobei der Prozessor (54) ferner eingerichtet ist, via die zweite Kommunikationsverbindung (II) auf einen Webserver zuzugreifen, der auf einer der HVAC-Vorrichtungen (10) läuft.

15. Elektronische Zugangskontrollvorrichtung (50) nach einem der Ansprüche 1 bis 14, wobei die elektronische Zugangskontrollvorrichtung (50) ferner einen visuellen Code umfasst, der auf einer Außenfläche eines Gehäuses der elektronischen Zugangskontrollvorrichtung (50) vorgesehen ist, wobei der visuelle Code eine mit der elektronischen Zugangskontrollvorrichtung (50) verknüpfte Vorrichtungskennung codiert; und der Prozessor (54) ferner eingerichtet ist, via die erste Kommunikationsverbindung (I) eine Kommunikationsanforderung von der externen Verarbeitungsvorrichtung (100) zu empfangen und zu prüfen, ob eine in der Kommunikationsanforderung enthaltene Vorrichtungskennung mit der von dem visuellen Code codierten Vorrichtungskennung übereinstimmt.

16. Elektronische Zugangskontrollvorrichtung (50) nach einem der Ansprüche 1 bis 15, wobei der Prozessor (54) eingerichtet ist, Augmented-Reality-Daten für die bestimmte der HVAC-Vorrichtungen (10) unter Verwendung von Dateninhalten zu erzeugen, die von der bestimmten der HVAC-Vorrichtungen (10) empfangen werden, wobei die Augmented-Reality-Daten ein Overlay umfassen, das als eine Schicht auf einem Videobild und/oder einer visuellen Darstellung der bestimmten der HVAC-Vorrichtungen (10) dargestellt wird; und umfassen die Augmented-Reality-Daten in der Datenantwort für die externe Verarbeitungsvorrichtung (100) zum Rendern der Augmented-Reality-Daten durch die externe Verarbeitungsvorrichtung (100).

17. Verfahren zur Steuerung des Datenzugriffs auf HVAC-Vorrichtungen (10) eines HVAC Systems (1) unter Verwendung einer elektronischen Zugangskontrollvorrichtung (50), die eine Vielzahl von elektronischen Kommunikationsschaltungen (52) und einen Prozessor (54) umfasst, der mit den elektronischen Kommunikationsschaltungen (52) verbunden ist, wobei das Verfahren die folgenden Schritte umfasst:
- Herstellen - mittels mindestens einer der elektronischen Kommunikationsschaltungen (52) der elektronischen Zugangskontrollvorrichtung (50) - einer ersten Kommunikationsverbindung (I) mit einer externen Verarbeitungsvorrichtung (100);
- Herstellen - mittels mindestens einer der elektronischen Kommunikationsschaltungen (52) der elektronischen Zugangskontrollvorrichtung (50) - einer zweiten Kommunikationsverbindung (II) mit einer oder mehreren der HVAC-Vorrichtungen (10);
- Empfangen - durch die elektronische Zugangskontrollvorrichtung - von der externen Verarbeitungsvorrichtung via die erste Kommunikationsverbindung (I) einer Datenanforderung, die an eine bestimmte der HVAC-Vorrichtungen (10) gerichtet ist;
- Prüfen der Berechtigung der Datenanforderung für die bestimmte der HVAC-Vorrichtungen mittels der elektronischen Zugangskontrollvorrichtung (50);
- Weiterleiten - mittels der elektronischen Zugangskontrollvorrichtung (50) - der Datenanforderung über die zweite Kommunikationsverbindung (II) an die bestimmte der HVAC-Vorrichtungen (10) bei positiver Autorisierung der Datenanforderung;
- Empfangen - mittels der elektronischen Zugangskontrollvorrichtung (50) - eines Dateninhalts über die zweite Kommunikationsverbindung (II) von der jeweiligen HVAC Vorrichtung (10);
- Erzeugen - mittels der elektronischen Zugangskontrollvorrichtung (50) - einer Datenantwort, die den Dateninhalt verwendet; und
- Übermitteln - mittels der elektronischen Zugangskontrollvorrichtung (50) - der Datenantwort über die erste Kommunikationsverbindung (I) an die externe Verarbeitungsvorrichtung.

18. Computerprogrammprodukt, das Befehle umfasst, die, wenn sie von einem Prozessor (54) einer elektronischen Zugangskontrollvorrichtung (50) ausgeführt werden, wobei die elektronische Zugangskontrollvorrichtung (50) eine Vielzahl von elektronischen Kommunikationsschaltungen (52) umfasst, die mit dem Prozessor (54) verbunden sind, die elektronische Zugangskontrollvorrichtung (50) veranlassen, das Verfahren zur Steuerung des Datenzugriffs auf HVAC-Vorrichtungen (10) eines HVAC-Systems (1) gemäß Anspruch 17 auszuführen.

## Revendications

1. Dispositif de contrôle d'accès électronique (50) pour contrôler l'accès aux données de dispositifs CVC (Chauffage, Ventilation et Climatisation) (10) d'un système CVC (1), le dispositif de contrôle d'accès électronique (50) comprenant une pluralité de circuits de communication électronique (52) et un processeur (54) connecté aux circuits de communication électronique (52),
dans lequel au moins l'un des circuits de communication électroniques (52) est configuré pour communiquer via une première liaison de communication (I) avec un dispositif informatique externe (100), séparé du système CVC (1);
au moins l'un des circuits de communication électroniques (52) est configuré pour communiquer via une deuxième liaison de communication (II) avec un ou plusieurs des dispositifs CVC (10) ; et
le processeur (54) est configuré pour
recevoir du dispositif informatique externe (100) via la première liaison de communication (I) une demande de données dirigée vers un dispositif particulier parmi les dispositifs CVC (10),
vérifier l'autorisation de la demande de données pour le dispositif particulier parmi les dispositifs CVC (10),
lorsque l'autorisation de la demande de données est affirmative, transmettre la demande de données via la deuxième liaison de communication (II) au dispositif particulier parmi les dispositifs CVC (10),
recevoir via la deuxième liaison de communication (II) un contenu de données provenant du dispositif particulier parmi les dispositifs CVC (10),
générer une réponse de données, en utilisant le contenu de données, et transmettre la réponse de données via la première liaison de communication (I) au dispositif informatique externe (100).

2. Dispositif de contrôle d'accès électronique (50) selon la revendication 1, dans lequel le processeur (54) est configuré pour vérifier l'autorisation de la demande de données en vérifiant les données de contrôle d'accès incluses dans la demande de données, en utilisant une cryptographie symétrique ou asymétrique.

3. Dispositif de contrôle d'accès électronique (50) selon l'une des revendications 1 ou 2, dans lequel le dispositif de contrôle d'accès électronique (50) comprend en outre une mémoire de données dans laquelle sont stockées des informations d'identification ; et le processeur (54) est configuré pour vérifier l'autorisation de la demande de données en comparant les informations d'identification incluses dans la demande de données aux informations d'identification stockées dans la mémoire de données.

4. Dispositif de contrôle d'accès électronique (50) selon l'une des revendications 1 à 3, dans lequel le dispositif de contrôle d'accès électronique (50) comprend en outre une mémoire de données dans laquelle sont stockées des données de droits d'accès ; et le processeur (54) est configuré pour vérifier l'autorisation de la demande de données en utilisant les données de droits d'accès stockées dans la mémoire de données et les informations d'identification d'accès incluses dans la demande de données.

5. Dispositif de contrôle d'accès électronique (50) selon l'une des revendications 1 à 4, dans lequel le processeur (54) est en outre configuré pour générer la réponse de données en cryptant le contenu de données provenant du dispositif CVC (10) particulier.

6. Dispositif de contrôle d'accès électronique (50) selon l'une des revendications 1 à 5, dans lequel au moins l'un des circuits de communication électronique (52) comprend un circuit de communication radio (52.1) configuré pour communiquer via une liaison de communication sans fil avec le dispositif informatique externe (100), le circuit de communication radio (52.1) étant configuré pour au moins l'une des communications suivantes : une communication d'interface à courte portée, une communication de réseau local sans fil (WLAN) ou une communication de réseau radio mobile cellulaire.

7. Dispositif de contrôle d'accès électronique (50) selon l'une des revendications 1 à 6, dans lequel au moins l'un des circuits de communication électroniques (52) comprend un circuit de communication radio (52.1) configuré pour communiquer via une liaison de communication sans fil avec un ou plusieurs des dispositifs CVC (10), le circuit de communication radio (52.1) étant configuré pour au moins l'une des communications suivantes : communication d'interface à courte portée ou communication de réseau local sans fil (WLAN).

8. Dispositif de contrôle d'accès électronique (50) selon l'une des revendications 1 à 7, dans lequel au moins l'un des circuits de communication électroniques (52) comprend un circuit de communication filaire (52.2) configuré pour communiquer via une liaison de communication filaire avec un ou plusieurs des dispositifs CVC (10) ; au moins l'un des circuits de communication électroniques (52) comprend un circuit de communication radio (52.1) configuré pour communiquer via une liaison de communication sans fil avec le dispositif informatique externe (100) ; et le dispositif de contrôle d'accès électronique (50) comprend en outre un accumulateur d'énergie électrique (58), couplé au circuit de communication filaire (52.2) pour récolter de l'énergie via le circuit de communication filaire (52.2), et connecté au circuit de communication radio (52.1) pour alimenter le circuit de communication radio (52.1).

9. Dispositif de contrôle d'accès électronique (50) selon la revendication 8, dans lequel le circuit de communication filaire (52.2) comprend au moins l'un des éléments suivants : un bus de communication série, un bus de communication parallèle, un circuit de communication Ethernet ou un circuit de communication Power over Ethernet.

10. Dispositif de contrôle d'accès électronique (50) selon l'une des revendications 8 ou 9, dans lequel le circuit de communication filaire (52.2) comprend au moins deux interfaces de communication configurées pour un chaînage en série.

11. Dispositif de contrôle d'accès électronique (50) selon l'une des revendications 6 à 8, dans lequel le circuit de communication radio (52.1) comprend au moins l'un des éléments suivants : un circuit de communication LPWAN (Low Power Wide Area Network), un circuit de communication WLAN, un circuit de communication sans fil à courte portée et/ou un circuit de communication sans fil à courte portée.

12. Dispositif de contrôle d'accès électronique (50) selon l'une des revendications 1 à 11, dans lequel le processeur (54) est en outre configuré pour recevoir via la deuxième liaison de communication (II) des rapports de données provenant des dispositifs CVC (10) ; pour stocker les rapports de données liés à un horodatage dans une mémoire de données du dispositif de contrôle d'accès électronique (50) ; et pour transmettre une collection de rapports de données horodatés stockés dans la mémoire de données du dispositif de contrôle d'accès électronique (50) via la première liaison de communication (I) au dispositif informatique externe (100).

13. Dispositif de contrôle d'accès électronique (50) selon la revendication 12, dans lequel le processeur (54) est en outre configuré pour déterminer un niveau d'énergie d'un accumulateur d'énergie électrique (58) du dispositif de contrôle d'accès électronique (50), et pour transmettre au moins une partie de la collecte de rapports de données horodatés en fonction du niveau d'énergie étant au-dessus d'un seuil d'énergie minimum défini.

14. Dispositif de contrôle d'accès électronique (50) selon l'une des revendications 1 à 13, dans lequel le processeur (54) est en outre configuré pour accéder via la deuxième liaison de communication (II) à un serveur web s'exécutant sur l'un des dispositifs CVC (10).

15. Dispositif de contrôle d'accès électronique (50) selon l'une des revendications 1 à 14, dans lequel le dispositif de contrôle d'accès électronique (50) comprend en outre un code visuel fourni sur une surface externe d'un boîtier du dispositif de contrôle d'accès électronique (50), le code visuel codant un identifiant de dispositif associé au dispositif de contrôle d'accès électronique (50) ; et le processeur (54) est en outre configuré pour recevoir via la première liaison de communication (I) une demande de communication provenant du dispositif informatique externe (100), et pour vérifier si un identifiant de dispositif inclus dans la demande de communication correspond à l'identifiant de dispositif codé par le code visuel.

16. Dispositif de contrôle d'accès électronique (50) selon l'une des revendications 1 à 15, dans lequel le processeur (54) est configuré pour générer des données de réalité augmentée pour le dispositif CVC (10) particulier, en utilisant le contenu de données reçu de l'un particulier des dispositifs CVC (10), les données de réalité augmentée comprenant une superposition à présenter sous la forme d'une couche sur une image vidéo et/ou une représentation visuelle de l'un particulier des dispositifs CVC (10) ; et pour inclure les données de réalité augmentée dans la réponse de données pour le dispositif informatique externe (100) pour le rendu des données de réalité augmentée par le dispositif informatique externe (100).

17. Procédé pour contrôler l'accès aux données de dispositifs CVC (Chauffage, Ventilation et Climatisation) (10) d'un système CVC (1) en utilisant un dispositif de contrôle d'accès électronique (50) comprenant une pluralité de circuits de communication électronique (52) et un processeur (54) connecté aux circuits de communication électronique (52), le procédé comprenant les étapes consistant à:
- établir - par au moins l'un des circuits de communication électronique (52) du dispositif de contrôle d'accès électronique (50) - une première liaison de communication (I) avec un dispositif informatique externe (100);
- établir - par au moins l'un des circuits de communication électronique (52) du dispositif de contrôle d'accès électronique (50) - une deuxième liaison de communication (II) avec un ou plusieurs des dispositifs CVC (10);
- recevoir - par le dispositif de contrôle d'accès électronique - du dispositif informatique externe via la première liaison de communication (I) une demande de données dirigée vers un dispositif particulier parmi les dispositifs CVC (10);
- vérifier l'autorisation de la demande de données pour le dispositif particulier parmi les dispositifs CVC - par le dispositif de contrôle d'accès électronique (50);
- transmission - par le dispositif de contrôle d'accès électronique (50) - de la demande de données via la deuxième liaison de communication (II) au dispositif CVC (10) particulier en cas d'autorisation affirmative de la demande de données;
- réception - par le dispositif de contrôle d'accès électronique (50) - via la deuxième liaison de communication (II) d'un contenu de données provenant du dispositif CVC (10) particulier;
- générer - par le dispositif de contrôle d'accès électronique (50) - une réponse de données, en utilisant le contenu de données ; et
- transmettre - par le dispositif de contrôle d'accès électronique (50) - la réponse de données via la première liaison de communication (I) au dispositif informatique externe.

18. Produit programme d'ordinateur, comprenant des instructions qui, lorsqu'elles sont exécutées par un processeur (54) d'un dispositif de contrôle d'accès électronique (50), le dispositif de contrôle d'accès électronique (50) comprenant une pluralité de circuits de communication électroniques (52) connectés au processeur (54), amènent le dispositif de contrôle d'accès électronique (50) à mettre en oeuvre le procédé de contrôle de l'accès aux données de dispositifs CVC (10) d'un système CVC (1) selon la revendication 17.
